# EUROPÄISCHE PATENTANMELDUNG

(11) **EP 1 309 056 A1**
(43) Veröffentlichungstag der Anmeldung: **07.05.2003**
(21) Anmeldenummer: 02023259.1
(22) Anmeldetag: 17.10.2002
(51) Int. Cl.: H02G 1/12

(54) **Verfahren und Einrichtung zur Abisolierung eines Flachkabels**

(30) Priorität: 26.10.2001 EP 01811049
(71) Anmelder: KOMAX HOLDING AG, 6036 Dierikon (CH)
(72) Erfinder: Meisser, Claudio, Dipl. El.-Ing. ETH, 6330 Cham (CH); Frommenwiler, Franz, Dipl. El.-Ing. HTL, 6023 Rothenburg (CH)
(74) Vertreter: Gaussmann, Andreas, Dr.

(57) **Zusammenfassung**

Bei dieser Abisoliereinrichtung (14) zum Freilegen von Leitern eines Flachkabels (1) wird das Flachkabel (1) mittels eines ersten Kabelvorschubes (15) und mittels eines zweiten Kabelvorschubes (17) in Transportrichtung (P1) transportiert. Während des Fräsvorganges wird das Flachkabel (1) mittels der Kabelvorschübe (15,17) gespannt. Ein Messrad (19) erfasst die Bewegung des Flachkabels (1), wobei die Bewegung des Messrades (19) mittels eines Encoders (20) in ein elektrisches Signal umgewandelt wird. Das Flachkabel (1) ist beidseitig geführt, wobei an der vorderen Kabelseite eine einstellbare Kabelführung (22) vorgesehen ist. Eine Fräsereinheit (24) mit Antrieb 25 ist in x-,y- und z-Richtung bewegbar.

## Beschreibung

Die Erfindung betrifft ein Verfahren bzw. eine Einrichtung zur Abisolierung eines Flachkabels mit in Isolation eingebetteten Leitern, wobei der Abisoliervorgang mechanisch erfolgt.

Aus der EP Patentanmeldung 1 124 297 ist eine Abisoliereinrichtung zum Freilegen von Leitern eines Flachkabels bekannt geworden, die im wesentlichen aus einem Vakuumtisch, aus einem Tischantrieb, aus einem Fräserantrieb und aus einem auf einem Schlitten angeordneten Vorschubantrieb, der den Fräserantrieb mitsamt dem Fräser auf dem Schlitten bewegt. Der Schlitten wird mittels an einem Gehäusetisch angeordneten Führungsschienen geführt. Der Gehäusetisch wird von einem Gehäuse getragen, an dem auch der Tischantrieb angeordnet ist. Der Vorschubantrieb bewegt sich mittels eines Ritzels entlang einer am Gehäuse angeordneten Zahnstange und führt die Bewegung des Schlittens aus. Der höhenverstellbare Vakuumtisch wird in Abhängigkeit des Vorschubantriebes und in Abhängigkeit der Detektion eines freizulegenden Leiters gesteuert.

Ein Nachteil der bekannten Einrichtung liegt darin, dass wegen der Auf-/Abbewegung des Vakuumtisches der gesamte Fräsvorgang relativ langsam ist. Ausserdem sind nahe beieinanderliegende Leiter mit dem Walzenfräser einzeln nicht genau genug freilegbar. Flachkabel mit einseitig freigelegten Leitern können lediglich mittels Ultraschallschweissen verbunden werden, wobei für den Schweissvorgang die Isolation durchstochen werden muss.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und ein Verfahren bzw. eine Einrichtung vorzuschlagen, mittels dem bzw. mittels der Leiter eines Flachkabels präzise freilegbar sind.

Die durch die Erfindung erreichten Vorteile sind im wesentlichen darin zu sehen, dass der Fräsvorgang weniger Zeit benötigt. Ausserdem sind feinere Fräsungen möglich, wobei auch in der Kabellängsachse leicht versetzte Fräsungen ohne Verschiebung des Flachkabels machbar sind. Dies wird mit einem Stirnfräser erreicht, der in der x-, y-und z-Richtung bewegbar ist. Ausserdem können die Leiter nicht nur von der einen Seite bzw. von oben freigelegt werden, sondern auch von der anderen Seite bzw. von unten freigelegt werden. Durchtrennen einzelner Leiter oder Durchbrüche im Flachkabel sind ebenfalls machbar. Flachkabel mit zweiseitig freigelegten Leitern können mittels Widerstandsschweissen verbunden werden, wobei eine saubere und sichere Kontaktierung machbar ist.

Im folgenden wird die Erfindung anhand von Ausführungsbeispiele darstellenden Zeichnungen näher erläutert.

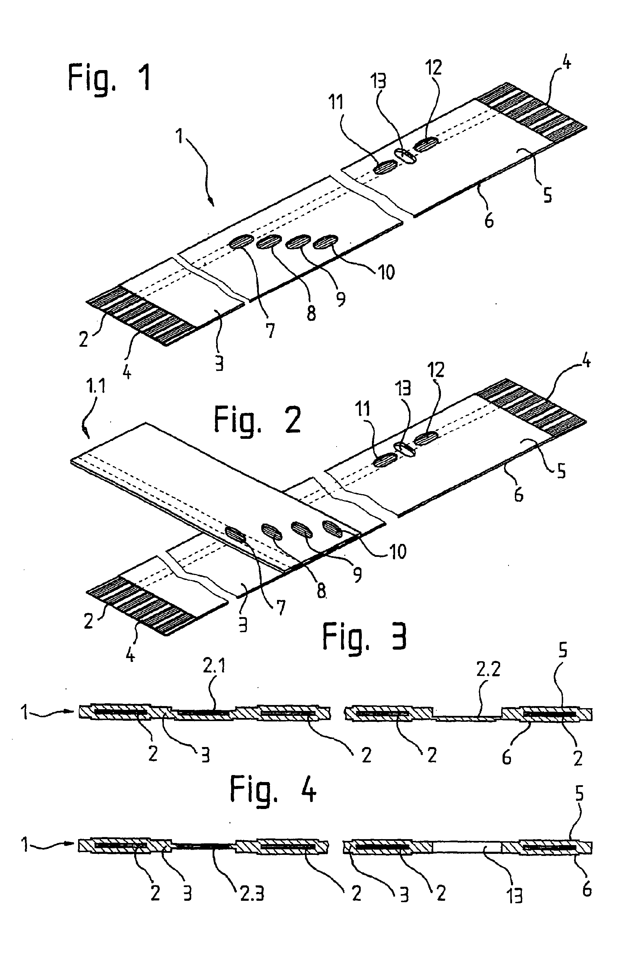

Es zeigen:
Fig. 1
   ein Flachkabel mit an den Kabelenden über die gesamte Kabelbreite freigelegten Leitern und mit Fräsungen in der Längsrichtung und mit einem Durchbruch in Querrichtung,
Fig. 2
   das Flachkabel der Fig. 1 in Verbindung mit einem weiteren Flachkabel, wobei die freigelegten Leiter miteinander verbunden sind,
Fig. 3
   einen Querschnitt des Flachkabels mit einem einseitig freigelegten Leiter und einem einseitig durchtrennten Leiter,
Fig. 4
   einen Querschnitt des Flachkabels mit einem zweiseitig freigelegten Leiter und einem zweiseitig hergestellten Durchbruch,
Fig. 5
   eine Abisoliereinrichtung zum Freilegen der Leiter an der Oberseite des Flachkabels,
Fig. 6
   eine Abisoliereinrichtung zum Freilegen der Leiter an der Oberseite und an der Unterseite des Flachkabels,
Fig. 7
   ein oberes und ein unteres z-Modul mit je einer Fräsereinheit zum Freilegen der Leiter an der Oberseite und an der Unterseite des Flachkabels,
Fig. 8
   einen oberen und einen unteren Fräserkopf der oberen bzw. der unteren Fräsereinheit,
Fig. 9
   einen Fräser des oberen Fräserkopfes und einen Stempel des unteren Fräserkopfes,
Fig. 10
   eine Fräsereinheit mit Fräser und Stempel und
Fig. 11
   eine Ausführungsvariante der Fräsereinheit mit Fräser und Stempel.

Die Fig. 1 bis 4 zeigen ein Flachkabel 1 mit flachen, in Längsrichtung parallel verlaufenden elektrischen Leitern 2, die in Isolationsmaterial, im weiteren Isolation 3 genannt, eingebettet sind. Fig. 1 zeigt das Flachkabel 1 mit an den Kabelenden 4 über die gesamte Kabelbreite an der Oberseite 5 freigelegten Leitern 2. Ausserdem sind mit in Kabellängsrichtung leicht versetzten Fräsungen 7,8,9,10 Leiter 2 freigelegt worden und der eine Leiter 2 mit zwei weiteren Fräsungen 11,12 freigelegt worden, wobei zwischen den beiden Fräsungen 11,12 mittels Kabeldurchbruch 13 der eine Leiter 2 unterbrochen worden ist.

Fig. 2 zeigt das Flachkabel 1 mit an den Kabelenden 4 über die gesamte Kabelbreite an der Oberseite 5 und an der Unterseite 6 freigelegten Leitern 2. Das Flachkabel 1 ist in Verbindung mit einem weiteren Flachkabel 1.1, wobei die je Kabel mittels Fräsungen 7,8,9,10 freigelegten Leiter 2 miteinander verbunden sind.

Fig. 3 zeigt einen Querschnitt des Flachkabels 1 mit einem von der Oberseite 5 her freigelegten Leiter 2.1 und einem von der Oberseite 5 her durchtrennten Leiter 2.2.

Fig. 4 zeigt einen Querschnitt des Flachkabeis 1 mit einem von der Oberseite 5 und von der Unterseite 6 her freigelegten Leiter 2.3 und mit dem zweiseitig hergestellten Durchbruch 13.

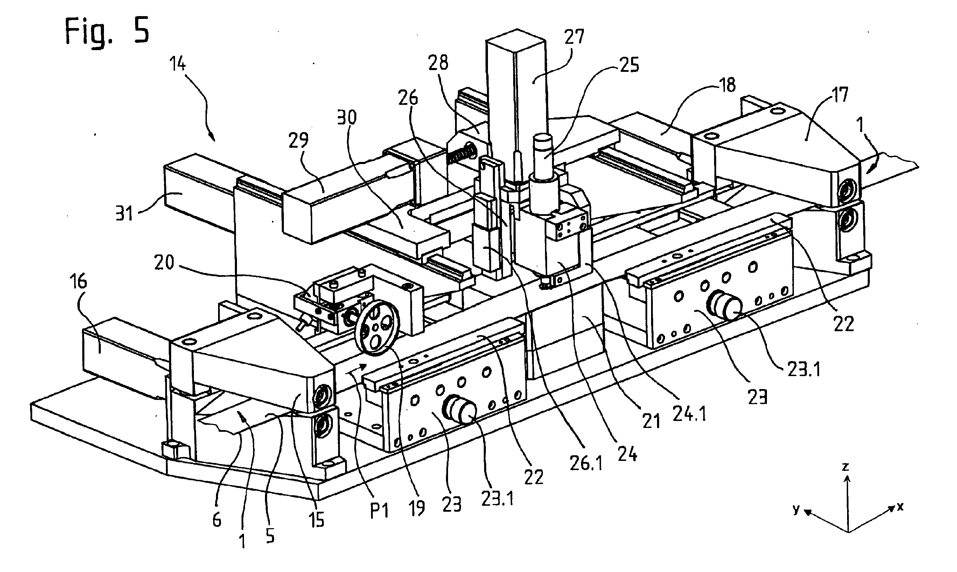

Fig. 5 zeigt eine Abisoliereinrichtung 14 zum Freilegen der Leiter 2 an der Oberseite 5 des Flachkabels 1. Das Flachkabel 1 wird mittels eines ersten Kabelvorschubes 15 mit Antrieb 16 und mittels eines zweiten Kabelvorschubes 17 mit Antrieb 18 transportiert. Die Transportrichtung ist mit einem Pfeil P1 symbolisiert. Während des Fräsvorganges ist das Flachkabel 1 ruhend und wird mittels der Kabelvorschübe 15,17 gespannt. Anstelle des ersten Kabelvorschubes 15 mit Antrieb 16 kann mindestens eine Bremsrolle vorgesehen sein. Ein Messrad 19 erfasst die Bewegung des Flachkabels 1, wobei die Bewegung des Messrades 19 mittels eines Encoders 20 in ein elektrisches Signal umgewandelt wird. Das Flachkabel 1 ist beidseitig geführt, wobei an der vorderen Kabelseite beidseitig eines Fräsertisches 21 eine Kabelführung 22 in Längsrichtung vorgesehen ist, die mittels einer Justiervorrichtung 23 am Handrad 23.1 einstellbar ist. Die Justiervorrichtung 23 kann auch motorisch einstellbar sein.

Eine Fräsereinheit 24 mit Kabelhalter 24.1 und Antrieb 25 ist in x-,y- und z-Richtung bewegbar. Dazu ist die Fräsereinheit 24 mit Antrieb 25 an einem z-Modul 26 mit Antrieb 27 angeordnet. Das z-Modul 26 mit Antrieb 27 ist an einem x-Modul 28 mit Antrieb 29 angeordnet. Das x-Modul 28 mit Antrieb 29 ist an einem y-Modul 30 mit Antrieb 31 angeordnet.

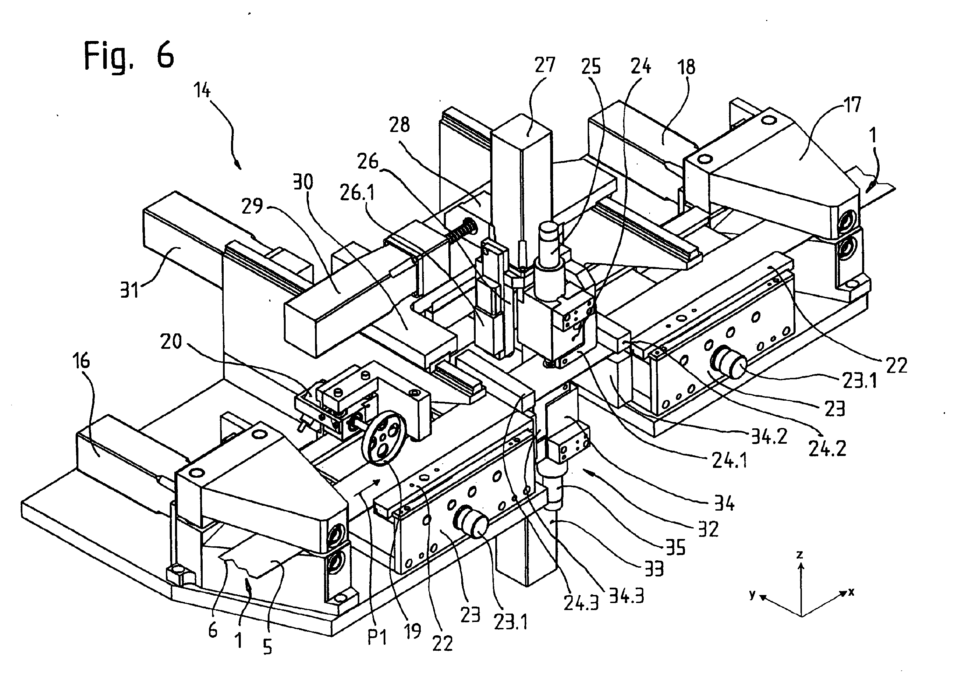

Fig. 6 zeigt eine Abisoliereinrichtung 14 zum Freilegen der Leiter 2 an der Oberseite 5 und an der Unterseite 6 des Flachkabels 1. Anstelle des Fräsertisches 21 ist ein weiteres, bzw. ein unteres z-Modul 32 mit Antrieb 33 vorgesehen, wobei eine weitere Fräsereinheit 34 mit Kabelhalter 34.1 und Antrieb 35 am z-Modül 32 angeordnet ist. Mit der weiteren Fräsereinheit 34 kann das Flachkabel 1 von der Unterseite 6 her bearbeitet werden. Beidseitig der Fräsereinheiten 24,34 sind beispielsweise pneumatische Kabelhalter 24.2,24.3,34.2,34.3 vorgesehen.

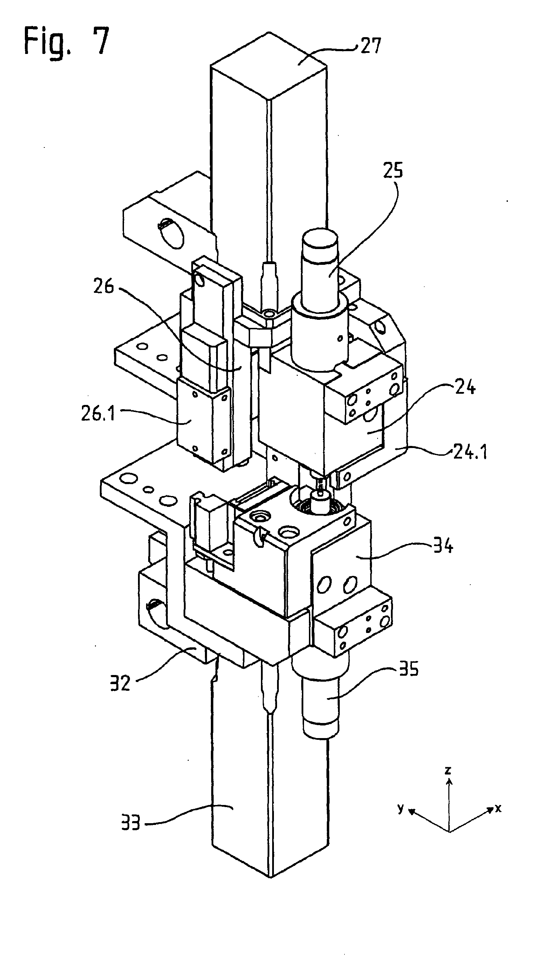

Fig. 7 zeigt das obere z-Modul 26 mit der Fräsereinheit 24 und das untere z-Modul 32 mit der Fräsereinheit 34 zum Freilegen der Leiter 2 an der Oberseite 5 bzw. an der Unterseite 6 des Flachkabels 1. Die die Fräsereinheiten 24,34 in vertikaler Richtung bewegenden z-Module 26,32 können je an einem x-Modul oder an einem gemeinsamen x-Modul angeordnet sein. Die Bewegung der oberen Fräsereinheit 24 in z-Richtung wird mittels eines Massstabes 26.1 gemessen. Die Bewegung der unteren Fräsereinheit 34 in z-Richtung wird mittels eines nicht sichtbaren Massstabes gemessen.

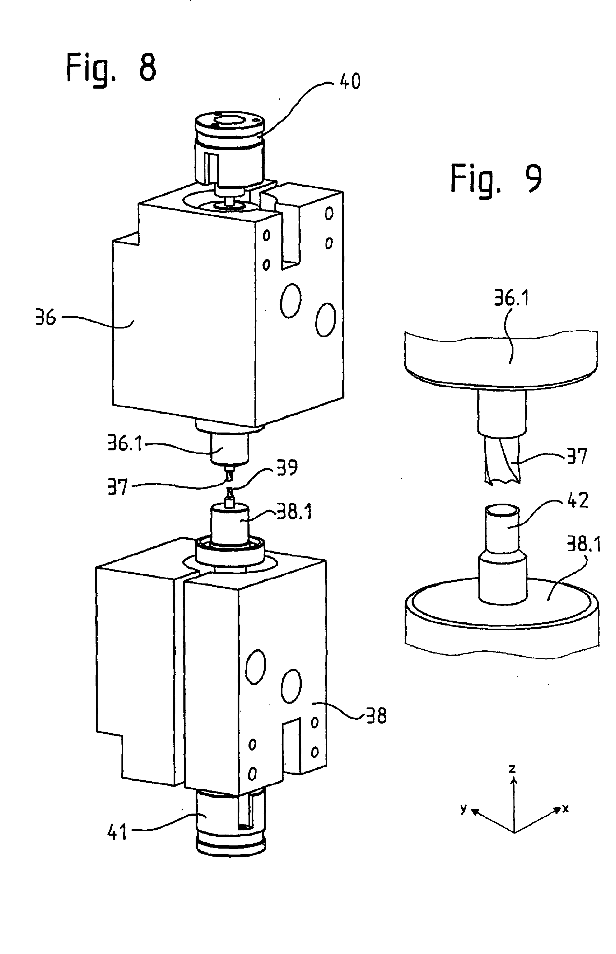

Fig. 8 zeigt einen oberen Fräserkopf 36 mit Spindel 36.1 und Fräser 37 und einen unteren Fräserkopf 38 mit Spindel 38.1 und Fräser 39. Der Antrieb 25 der oberen Fräsereinheit 24 ist mittels einer Kupplung 40 mit der Spindel 36.1 und der Antrieb 35 der unteren Fräsereinheit 34 ist mittels einer Kupplung 41 mit der Spindel 38.1 verbunden.

Fig. 9 zeigt den als Stirnfräser ausgebildeten Fräser 37 des oberen Fräserkopfes 36. Anstelle des Fräsers 39 des unteren Fräserkopfes 38 ist ein Stempel 42 vorgesehen, der im Bereich des oberen Fräsers 37 als Auflage für das Flachkabel 1 dient. Fräser und Stempel können auch vertauscht sein.

Zur Durchführung beispielsweise der Fräsung 11 wird der Fräser 37 in x- und y-Richtung an den Anfang der Fräsung bewegt und anschliessend in z-Richtung abgesenkt, wobei der rotierende Fräser 37 die Isolation 3 entfernt. Sobald der blanke Leiter 2 detektiert wird, wird der Fräser 37 in x-Richtung bewegt bis der Leiter 2 in der vorgegebenen Länge freigelegt ist. Dann wird der Fräser 37 wieder angehoben.

Die Detektion des blanken Leiters kann beispielsweise auf dem Prinzip des elektrischen Durchganges erfolgen, wobei mindestens ein Fräser und der blanke Leiter einen Stromkreis schliessen.

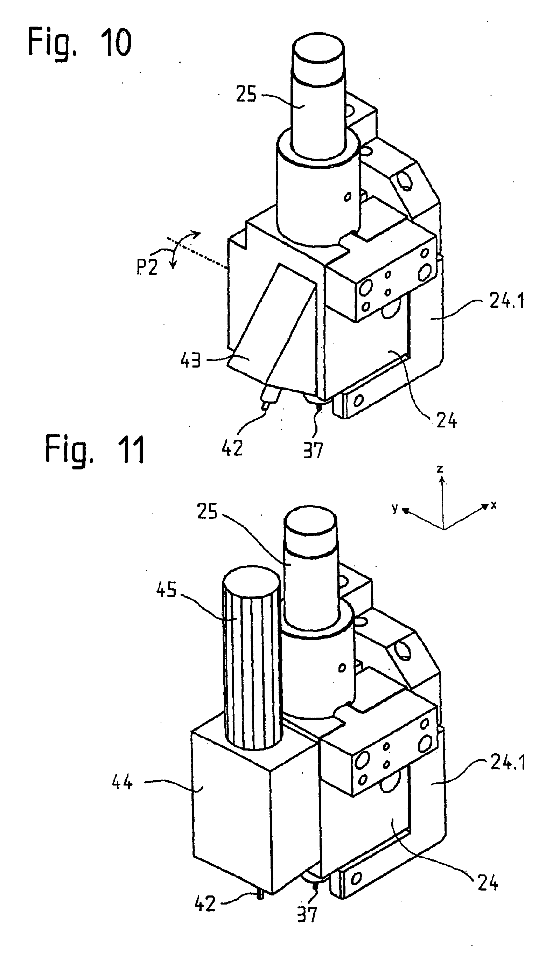

Wie in Fig. 10 gezeigt kann die Fräsereinheit 24,34 auch für einen automatischen Wechsel des Fräsers 37,39 bzw. des Stempels 42 vorgesehen sein. Beispielsweise kann die Fräsereinheit 24,34 mit dem Antrieb 25,35 drehbar, wie mit Pfeil P2 symbolisiert, am z-Modul 26,32 angeordnet sein, wobei der Stempel 42 an einem Ausleger 43 des Fräserkopfes 36,38 angeodnet ist. Je nach Arbeitsprogramm wird die Spindel 36.1,38.1 mit dem Fräser 37,39 oder der Ausleger 43 mit dem Stempel 42 in die Arbeitslage gedreht.

Fig. 11 zeigt eine Ausführungsvariante der Fräsereinheit 24,34 mit Fräser 37,39 und Stempel 42. Ein an der Fräsereinheit 24,34 angeordnetes Gehäuse 44 dient als Träger für einen Pneumatikzylinder 45, an dem der Stempel 42 angeordnet ist. Der Pneumatikzylinder 45 bewegt den Stempel 42 in der z-Richtung. Der Versatz zwischen dem Fräser 37 und dem Stempel 42 wird vom x-Modul und/oder y-Modul des gegenüberliegenden Fräsers kompensiert.

## Patentansprüche

1. Verfahren zur Abisolierung eines Flachkabels (1) mit in Isolation (3) eingebetteten Leitern (2), wobei der Abisoliervorgang mechanisch erfolgt,
**dadurch gekennzeichnet,**
**dass** der Abisoliervorgang bei ruhendem Flachkabel (1) in x-,y- und z-Richtung erfolgt.

2. Verfahren nach Anspruch 1,
**dadurch gekennzeichnet,**
**dass** der Abisoliervorgang an der Oberseite (5) und/oder an der Unterseite (6) des Flachkabels (1) erfolgt.

3. Verfahren nach den Ansprüchen 1 oder 2,
**dadurch gekennzeichnet,**
**dass** beim Abisoliervorgang Leiter (2) freigelegt und/oder durchtrennt und/oder Durchbrüche (13) hergestellt werden.

4. Einrichtung zum Abisolieren eines Flachkabels (1) mit in Isolation (3) eingebetteten Leitern (2), wobei die Abisolierung mittels einer Abisoliervorrichtung (24,34) erfolgt,
**dadurch gekennzeichnet,**
**dass** mindestens eine in x-,y- und z-Richtung bewegbare Abisoliervorrichtung (24,34) vorgesehen ist.

5. Einrichtung nach Anspruch 4,
**dadurch gekennzeichnet,**
**dass** an der Oberseite (5) und/oder an der Unterseite (6) des Flachkabels (1) eine Abisoliervorrichtung (24,34) vorgesehen ist.

6. Einrichtung nach einem der Ansprüche 4 oder 5,
**dadurch gekennzeichnet,**
**dass** die Abisoliervorrichtung (24,34) einen in x-,y- und z-Richtung bewegbaren Stirnfräser (37,39) und/oder einen in x-,y- und z-Richtung bewegbaren Stempel (42) aufweist.
